# EUROPÄISCHE PATENTSCHRIFT

(11) **EP 0 358 969 B1**
(45) Veröffentlichungstag und Bekanntmachung des Hinweises auf die Patenterteilung: **19.10.1994**
(21) Anmeldenummer: 89115143.3
(22) Anmeldetag: 17.08.1989
(51) Int. Cl.: D06B 3/20

(54) **Vorrichtung zum wassersparenden Waschen von laufenden Warenbahnen**
Apparatus for economically washing moving webs
Installation de lavage de bandes en déplacement

(30) Priorität: 15.09.1988 DE 3831316
(43) Veröffentlichungstag der Anmeldung: 21.03.1990
(73) Patentinhaber: Babcock Textilmaschinen GmbH, 21209 Seevetal (DE)
(72) Erfinder: Tischbein, Claus, Dipl.-Ing., D-2110 Buchholz 24 (DE)
(74) Vertreter: Planker, Karl-Josef, Dipl.-Phys.

(56) Entgegenhaltungen:
- EP-A- 0 180 755
- EP-A- 0 197 429
- EP-A- 0 316 859
- DE-A- 3 324 650
- DE-U- 8 715 388
- FR-A- 2 087 329

## Beschreibung

Die Erfindung betrifft eine Vorrichtung zum wassersparenden Waschen von laufenden Warenbahnen gemäß dem einleitenden Teil des Patentanspruchs 1.

Sie baut auf einer Vorrichtung auf, die in DE 87 15 388 U1 beschrieben ist. Dabei sind die Verteilerrohre und die Flachstrahldüsen eines jeden Behandlungsabteils gemeinsam an eine Pumpe angeschlossen. Diese ist mit dem Auffangbehälter verbunden, der diesem Behandlungsabteil zugeordnet ist. Die Abflußleitung ist so ausgebildet, daß die gesamte von dem Trichter aufgefangene Waschflotte mit der am Boden des Behandlungsabteils gesammelten Waschflotte zusammengeführt wird.

Von dieser Vorrichtung unterscheidet sich eine ahnliche, durch EP 0 197 429 bekanntgewordene Vorrichtung insbesondere durch drei Merkmale. Das erste Unterscheidungsmerkmal besteht darin, daß die Waschflotte allein durch am Ausgang der einzelnen Behandlungsabteile angebrachte Flachstrahldusen auf die Ware aufgebracht wird. Das zweite Merkmal besteht darin, daß die von dem Trichter aufgefangene Waschflotte nicht mit der am Boden des gleichen Behandlungsabteils gesammelten Waschflotte zusammengeführt wird, sondern mit der Waschflotte, die am Boden des in Warenlaufrichtung folgenden Behandlungsabteils gesammelt wird.

Das dritte Unterscheidungsmerkmal besteht darin, daß von der Abflußleitung des Trichters eine Zweigleitung ausgeht, die zu dem Auffangbehälter des in Warenlaufrichtung folgenden Behandlungsabteils geführt ist.

FR 2 087 329 A zeigt ebenfalls eine Vorrichtung zur Naßbehandlung eines endlosen Materials in mehreren hintereinander geschalteten Behandlungsabteilen mit einer im Gegenstrom geführten Flüssigkeit. Den Behandlungsabteilen ist je ein Auffangbehälter für die gesamte in dem Behandlungsabteil gesammelte Flüssigkeit zugeordnet. Jedem Behandlungsabteil wird eingangsseitig mit einer Pumpe Flüssigkeit aus dem zugeordneten Auffangbecken zugeführt. Außerdem wird dem Behandlungsabteil ausgangsseitig Flüssigkeit aus dem Auffangbehälter des in Warenlaufrichtung folgenden Behandlungsabteils zugeführt.

Der Erfindung liegt die Aufgabe zugrunde, durch verbesserte Führung der Waschflotte eine weitere Wassereinsparung zu erzielen.

Diese Aufgabe wird durch die kennzeichnenden Merkmale des Anspruchs 1 gelöst.

Weitere vorteilhafte Merkmale der Erfindung sind Gegenstand der Unteransprüche 2 bis 4.

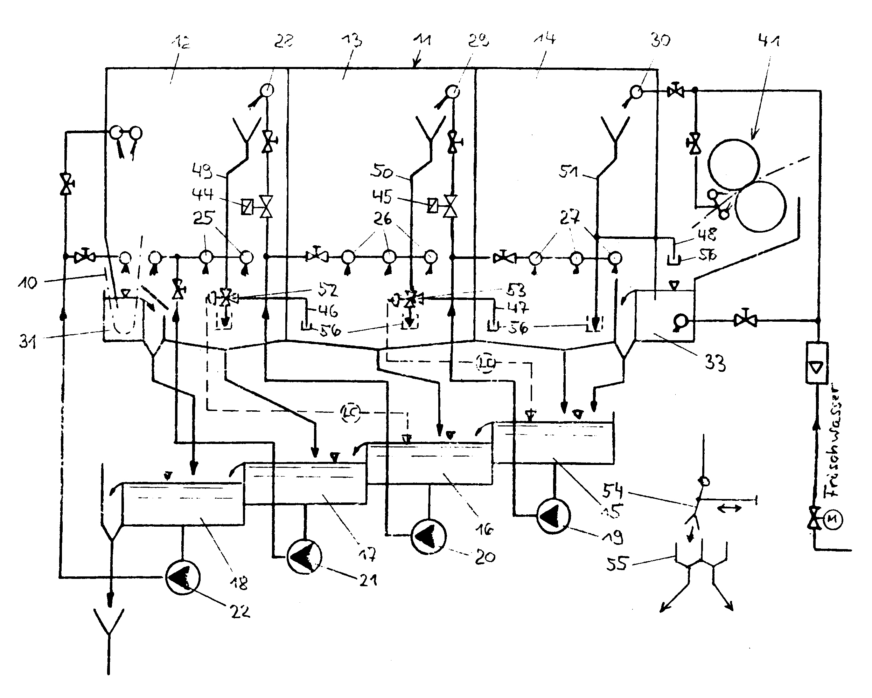

Die Zeichnung dient zur Erläuterung der Erfindung. In der Darstellung, die sich auf die Führung der Waschflotte beschränkt, ist die Warenbahn, um die Darstellung nicht zu verwirren, nur angedeutet. Es wird insoweit auf die Zeichnung von DE 87 15 388 U1 verwiesen. In der Zeichnung wurden weitgehend die gleichen Bezugszeichen verwendet wie dort.

Im Gehäuse 11, welches von der Warenbahn 10 durchlaufen wird, sind mehrere voneinander getrennte Behandlungsabteile 12, 13, 14 in Warenlaufrichtung hintereinander angeordnet. In jedem Behandlungsabteil 12, 13, 14 sind Verteilerrohre 25, 26, 27 und Flachstrahldüsen 28, 29, 30 angeordnet, durch die der Warenbahn 10 die Waschflotte zugeführt wird. Die von der Warenbahn ablaufende Waschflotte wird am Boden eines jeden Behandlungsabteils 12, 13, 14 gesammelt und für jedes Behandlungsabteil getrennt Auffangbehältern 15, 16, 17 zugeführt, die den einzelnen Behandlungsabteilen 12, 13, 14 zugeordnet sind. Aus den Auffangbehältern wird die Waschflotte über Pumpen 21, 20, 19 in die Behandlungsabteile 12, 13, 14 zurückgefördert und über die Verteilerrohre 25, 26, 27 und die Flachstrahldüsen 28, 29, 30 wieder der Warenbahn 10 zugeführt. Die geförderten Flottenmengen können durch Regelventile in den Zuleitungen eingestellt werden.

Die den Verteilerrohren 25, 26, 27 zugeführte Waschflotte wird in den Auffangbehälter 17, 16, 15 zurückgeführt, aus dem sie entnommen wurde, also im Kreislauf geführt. Die den Flachstrahldüsen 28, 29 zugeführte Waschflotte wird dagegen dem Auffangbehälter 16, 15 des in Warenlaufrichtung folgenden Abschnitts entnommen. Dadurch wird ein besserer Flottenaustausch in der Ware bei größerer Konzentrationsdifferenz und damit ein höherer Wascheffekt erreicht.

Um eine Entleerung der Auffangbehälter 17, 16, 15 bei Warenstillstand und damit Sperrung der Frischwasserzufuhr zu vermeiden, sind in den Zuleitungen für die Waschflotte zu den Flachstrahldüsen Magnetventile 44, 45 angeordnet, die bei Warenstillstand geschlossen werden.

Zur Rückführung der mit den Flachstrahldüsen 28, 29 zugeführten Waschflotte in den Auffangbehälter 16, 15, aus dem diese Waschflotte entnommen ist, sind Rückfuhrleitungen 46, 47 vorgesehen, die von den Abflußrohren 49, 50 abgezweigt sind. Es kann dann wahlweise das Abflußrohr 49, 50 oder die Rückführleitung 46, 47 mit einer Schraubkappe 56 verschlossen werden.

Eine automatische teilweise oder vollständige Rückführung der mit den Flachstrahldüsen zugeführten Waschflotte in den Auffangbehälter 20, 19 des in Warenlaufrichtung folgenden Behandlungsabteils 13, 14 kann in Abhängigkeit vom Niveau im zugehörigen Auffangbehälter 20, 19 - wie in der Zeichnung mit unterbrochenen Linien angedeutet - durch 3-Wege-Ventile 52, 53 zwischen Abflußrohr 49, 50 und Rückführleitung 46, 47 ermöglicht werden. In diesem Fall können die Magnetventile 44, 45 in den Zuleitungen zu den Flachstrahldüsen entfallen.

Es liegt auch im Rahmen der Erfindung, statt der automatisch gesteuerten 3-Wege-Ventile handbetätigte Schwenkrohre 54 über Stromteilertrichtern 55 zur Anwendung zu bringen, wie in der kleinen Skizze in der Zeichnung angedeutet.

Der Umwälzung bzw. Rückführung der Waschflotte ist eine Führung im Gegenstrom zur Laufrichtung der Warenbahn überlagert. Diese wird dadurch erreicht, daß die Auffangbehälter 15, 16, 17, 18 kaskadenförmig angeordnet sind, so daß die Waschflotte entgegen der Laufrichtung der Warenbahn jeweils über ein Wehr von Auffangbehälter zu Auffangbehälter fließt.

## Patentansprüche

1. Vorrichtung zum wassersparenden Waschen von laufenden Warenbahnen, insbesondere bei Waschprozessen für die Lösungswäsche oder dergleichen, mit folgenden Merkmalen:
a) Ein Gehäuse (11) weist eine Eintritts- und eine Austrittsöffnung für die Warenbahn (10) auf und ist im übrigen geschlossen und dampfdicht.
b) In dem Gehäuse (11) sind mehreren voneinander getrennte Behandlungsabteile (12, 13, 14) in Warenlaufrichtung hintereinander angeordnet.
c) In den Behandlungsabteilen (12, 13, 14) sind obere und untere Reihen von Umlenkwalzen zum Hindurchführen der Warenbahn (10) in senkrechten Schleifen angeordnet.
d) Jedem Behandlungsabteil (12, 13, 14) ist ein Auffangbehälter (17, 16, 15) für die von der Warenbahn (10) abfließende, am Boden des Behandlungsabteils gesammelte Waschflotte zugeordnet.
e) Die Auffangbehälter (15, 16, 17) sind für die Führung der Waschflotte im Gegenstrom zur Laufrichtung der Warenbahn kaskadenartig über Wehre verbunden.
f) An den unteren Umlenkwalzen sind Verteilerrohre (25, 26, 27) für die direkte Einführung von Waschflotte in die Zwickel zwischen der Warenbahn (10) und den Umlenkwalzen angeordnet.
g) Die Verteilerrohre eines jeden Behandlungsabteils (12, 13, 14) sind an eine Pumpe (21, 20, 19) angeschlossen, die mit dem zugeordneten Auffangbehälter (17, 16, 15) verbunden ist.
h) Am Auslauf eines jeden Behandlungsabteils (12, 13, 14) sind Flachstrahldüsen (28, 29, 30) zum Besprühen der Warenbahn im Bereich eines kurzen, etwa horizontalen Warenbahnführungsabschnitts angebracht.
i) Dem horizontalen Warenbahnführungsabschnitt ist ein Trichter mit Abflußleitung (49, 50, 51) zugeordnet, über welche die im Trichter gesammelte Waschflotte mit der am Boden des gleichen Behandlungsabteils (12, 13, 14) gesammelten Waschflotte zusammenführbar ist
gekennzeichnet durch folgende weitere Merkmale:
j) Die Flachstrahldüsen (28, 29) eines Behandlungsabteils (12, 13) sind an eine Pumpe (20, 19) angeschlossen, die mit dem Auffangbehälter (16, 15) des in Warenlaufrichtung folgenden Behandlungsabteils (13, 14) verbunden ist.
k) Von der Abflußleitung (49, 50) ist eine Rückführleitung (46, 47) zum vollständigen oder teilweisen Rückführen der in dem Trichter gesammelten Waschflotte in das in Warenlaufrichtung folgende Behandlungsabteil (13, 14) abgezweigt.

2. Vorrichtung nach Anspruch 1, dadurch gekennzeichnet, daß in den Zuleitungen zu den Flachstrahldüsen (28, 29, 30) bei Warenstillstand schließende Magnetventile (44, 45) angeordnet sind.

3. Vorrichtung nach Anspruch 1 oder 2, dadurch gekennzeichnet, daß zwischen Abflußleitung (49, 50) und Rückführleitung (46, 47) vom Niveau in den Auffangbehältern (16, 15) gesteuerte 3-Wege-Ventile (52, 53) angeordnet sind.

4. Vorrichtung nach Anspruch 1 oder 2, gekennzeichnet durch an den Abflußrohren (49, 50) angeschlossene handbetätigte Schwenkrohre (54) mit Stromteilertrichtern (55).

## Claims

1. Device for the water-saving washing of moving fabric webs, in particular in washing processes for solvent washes or the like, having the following features:
a) a housing (11) has an inlet and an outlet opening for the fabric web (10) and is otherwise closed and steam-tight;
b) in the housing (11), several treatment sections (12, 13, 14) are arranged in series in the running direction of the fabric;
c) in the treatment sections (12, 13, 14), upper and lower rows of idle rolls for threading through the fabric web (10) in vertical loops are arranged;
d) each treatment section (12, 13, 14) is associated with a catch basin (17, 16, 15) for the washing liquor flowing from the fabric web (10) and collecting at the base of the treatment section;
e) the catch basins (15, 16, 17) are connected with each other in a cascade-like fashion via weirs, in order to guide the washing liquor opposite to the flow direction of the fabric web;
f) on the lower idle rolls, distribution pipes (25, 26, 27) are arranged for the direct introduction of washing liquor into the gussets between the fabric web (10) and the idle rolls;
g) the distribution rolls of each of the treatment sections (12, 13, 14) are connected to a pump (21, 10, 19) which is in communication with the associated catch basin (17, 16, 15);
h) at the outlet of each treatment section (12, 13, 14), fan nozzles (28, 29, 30) for spraying the fabric web in the area of a short and approximately horizontal fabric web guiding portion are provided;
i) the horizontal fabric web guiding portion is associated with a funnel having a drain pipe (49, 50, 51), through which the washing liquor collected in the funnel is merged with the washing liquor collected at the base of the same treatment section (12, 13, 14); characterized by the following additional features:
j) the fan nozzles (28, 29) of a treatment section (12, 13) are connected to a pump (20, 19) which is in communication with the catch basin (16, 15) of the treatment section (13, 14) following in running direction of the fabric;
k) from the drain pipe (49, 50) a return pipe (46, 47) branches off, in order to completely or partially return the washing liquor collected in the funnel into the treatment section (13, 14) following in the running direction of the fabric.

2. Device as claimed in Claim 1, characterized in that solenoid valves (44, 45) closing in the case of a stop of the fabric flow are provided in the supply lines to the fan nozzles (28, 29, 30).

3. Device as claimed in Claim 1 or 2, characterized in that between the drain pipe (49, 50) and the return pipe (46, 47) three-way valves (52, 53) are provided which are controlled on the basis of the fluid level in the catch basin (16, 15).

4. Device as claimed in Claim 1 or 2, characterized by manually operated swing pipes (54) with flow divider funnels (55), which are connected to the drain pipes (49, 50).

## Revendications

1. Dispositif pour layer des bandes de matière qui défilent, en économisant l'eau, en particulier pour un processus de lavage par dissolution ou analogue, comportant les dispositions suivantes:
a) Une enceinte (11) présente une ouverture d'entrée et une ouverture de sortie pour la bande de matière (10), et est au surplus fermée et étanche à la vapeur.
b) Dans l'enceinte (11) sont prévus plusieurs compartiments de traitement (12, 13, 14) séparés l'un de l'autre et disposés à la suite l'un de l'autre dans le sens de défilement de la bande de matière.
c) Dans les compartiments de traitement (12, 13, 14) sont prévues des rangées supérieures et inférieures de rouleaux de renvoi pour assurer à travers l'enceinte la circulation de la bande de matière (10) en boucles verticales.
d) A chaque compartiment de traitement (12, 13, 14) est associé un réservoir de recueil (17, 16, 15) pour le liquide de lavage qui s'écoule de la bande de matière (10) et se rassemble au fond du compartiment de traitement.
e) Pour faire circuler le liquide de lavage en sens inverse du sens de défilement de la bande de matière, les réservoirs de recueil (15, 16, 17) sont reliés entre eux en cascade par des rebords d'écoulement.
f) A l'endroit des rouleaux de renvoi inférieurs, sont prévus des tuyaux de distribution (25, 26, 27) pour amener directement le liquide de lavage dans les onglets formés entre la bande de matière (10) et les rouleaux de renvoi.
g) Les tuyaux de distribution de chacun des compartiments de traitement (12, 13, 14) sont branchés chacun sur une pompe (21, 20, 19), qui est reliée au réservoir de recueil correspondant (17, 16, 15). h) A l'endroit de la sortie de chaque comportiment
de traitement (12, 13, 14) sont prévues des têtes d'arrosage à jet plat (28, 29, 30) pour arroser la bande de matière à l'endroit d'une partie courte et sensiblement horizontale de la bande guidée à cet effet.
i) A cette partie horizontale de la bande de matière est associée une trémie pourvue d'une canalisation d'écoulement (49, 50, 51) qui permet au liquide de lavage recueilli dans la trémie de rejoindre le liquide de lavage rassemblé au fond du même compartiment de traitement (12, 13, 14).
caractérisé en ce qu'il comporte au surplus les particularités suivantes :
j) Les têtes d'arrosage à jet plat (28, 29) d'un compartiment de traitement (12, 13) sont branchées sur une pompe (20, 19) qui est reliée au réservoir de recueil (16, 15) du compartiment de traitement (13, 14) disposé à la suite dans le sens de défilement de la bande de matière.
k) Sur la canalisation d'écoulement (49, 50) est branchée en dérivation une canalisation de retour (46, 47) pour permettre un retour total ou partiel du liquide de lavage rassemblé dans la trémie, vers le compartiment de traitement (13, 14) disposé à la suite dans le sens de défilement de la bande de matière.

2. Dispositif selon la revendication 1, caractérisé en ce qu'il comporte des électro-vannes (44, 45) montées sur les canalisations d'arrivée aux têtes d'arrosage à jet plat (28, 29, 30), et prévues pour se fermer à l'arrêt de la bande de matière.

3. Dispositif selon la revendication 1 ou 2, caractérisé en ce qu'il comporte, entre la canalisation d'écoulement (49, 50) et la canalisation de retour (46, 47), des robinets à trois voies (52, 53) commandés en fonction du niveau dans les réservoirs de recueil (16, 15).

4. Dispositif selon la revendication 1 ou 2, caractérisé en ce qu'il comporte des tuyaux articulés (54) branchés sur les tuyaux d'écoulement (49, 50) et pouvant être manoeuvrés à la main en regard de trémies de répartition (55) du débit d'écoulement.
